# EUROPEAN PATENT SPECIFICATION

(11) **EP 3 249 551 B1**
(45) Date of publication and mention of the grant of the patent: **28.11.2018**
(21) Application number: 16171563.6
(22) Date of filing: 26.05.2016
(51) Int. Cl.: G06F 17/30

(54) **A CONTROL SYSTEM FOR CONTROLLING THE OPERATION OF A DATA PROCESSING UNIT**
STEUERUNGSSYSTEM ZUR STEUERUNG DES BETRIEBS EINER DATENVERARBEITUNGSEINHEIT
SYSTÈME DE COMMANDE POUR LE FONCTIONNEMENT D'UNE UNITÉ DE TRAITEMENT DE DONNÉES

(43) Date of publication of application: 29.11.2017
(73) Proprietor: IG Knowhow Limited, London EC4R 2YA (GB)
(72) Inventor: LEVINE, Boris, London, EC4R 2YA (GB); CLOKE, Jamie Roland, London, EC4R 2YA (GB)
(74) Representative: Ahmad, Sheikh Shakeel

(56) References cited:
- WO-A1-2015/126301
- US-A1- 2009 287 628
- US-A1- 2011 280 137

## Description

### TECHNICAL FIELD

The present invention concerns a control system for controlling the operation of a data processing unit which is comprised of a group of interconnected processing modules, and more particularly but not exclusively, relates to a control system and non-invasive method for automated control of a complex data processing unit using the measurement of latency of record processing within the data processing unit, and taking action based on the results of the latency measurements to minimise the latency of the data processing unit.

### BACKGROUND

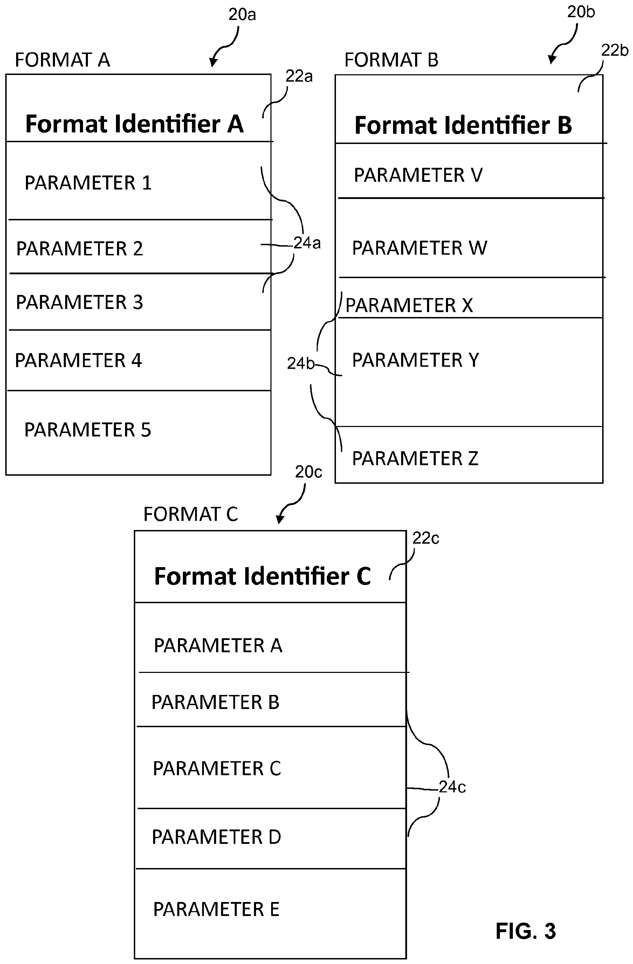

There is a need for accurate real-time measurement and reporting of latency information for a complex data processing network which receives a plurality of data streams from different data providers, and comprises a network of interconnected data processing units (hereafter also interchangeably referred to as processor boxes) through which the data streams are passed, before being output to one of more data receivers. Each data stream corresponds to a continuous stream of data records received from the data providers over time and examples of the data structure of some of the records in these data streams may be seen in Figure 3. The data records received by such data processing networks typically have a very high arrival rate - in some cases, thousands or even hundreds of thousands of data records may be received by a network every second for processing.

To add a further layer of complexity, not only are there multiple interconnected processor boxes within a complex data processing network, each processor box may also comprise multiple interconnected sub-processors (hereafter also interchangeably referred to as processing modules) that read, analyse and process the data records passing through the processor boxes. The information carried by data records in different data streams (received from different data providers) may vary and the exact processing and analysis steps that are required for a data record in one data stream may differ from those required for another data record in a different data stream. It may therefore be seen that the path taken by a particular data record within such a network will vary based on the processing and analysis that is to be carried out for that record.

In such complex networks, it is important to identify as early as possible any problems arising which could increase the latency of the system. It is also important to be able to diagnose and address the cause of the increased latency; this requires accurate pinpointing of the particular portion of the network that is experiencing a delay in processing at any particular time, so as to allow the appropriate action to be taken to attempt to minimise the latency of the network as a whole.

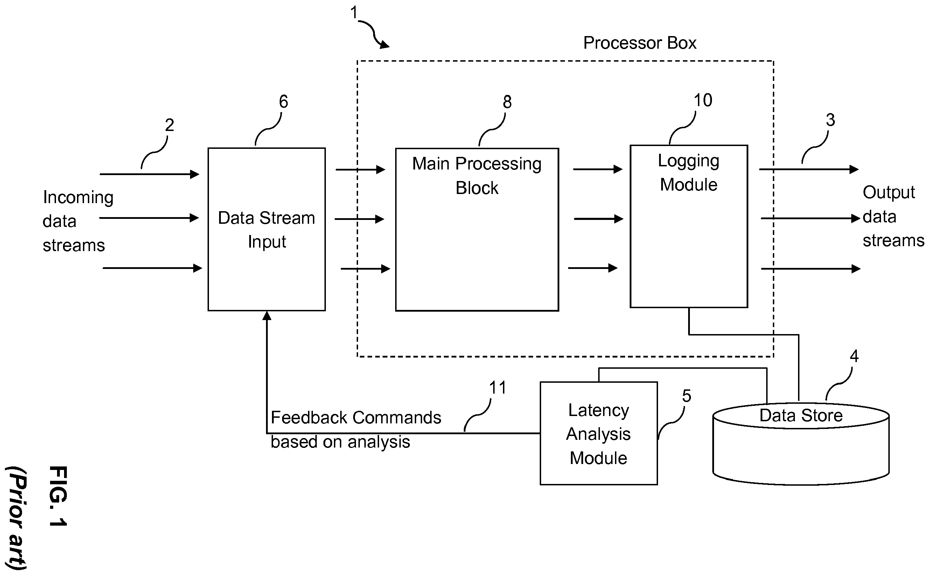

A system for measuring and reporting the above-mentioned latency information for a complex data processing network is known. The implementation of this known latency measuring system is illustrated in **Figure 1** in context with an example data processing unit (where multiple data processing units are comprised within the data processing network) and is described below.

Figure 1 shows a prior art processor box 1 (comprising a part of the overall data processing network that is under analysis) which receives and processes incoming data streams 2 from various data providers. The processed data streams 3 are thereafter output to other processor boxes in the data processing network, or to one or more data receivers if the current processor box is the final component in the data processing network. The processor box is in operative communication with a data store 4 which stores data from a data logging module. An offline latency analysis module 5 may be provided to analyse the data to determine if any instances of increased latency have occurred within the processor box 1.

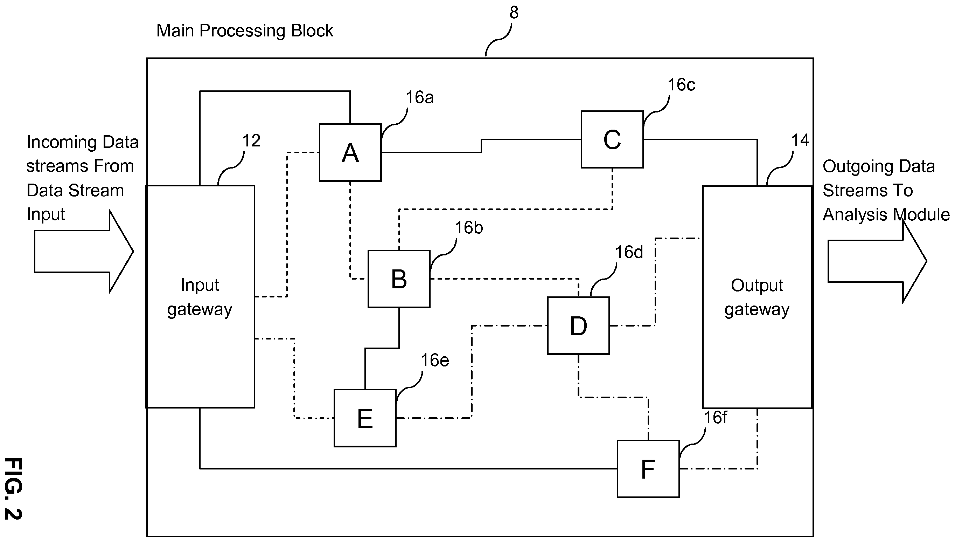

The processor box 1 comprises multiple components through which data records that make up the incoming data streams pass, namely a data stream input 6, a main processing block 8 and a logging module 10. Each incoming data record is parsed by the data stream input 6 and subsequently forwarded to an appropriate input (not shown) of the main processing block 8 based on certain properties of that data record. The main processing block 8 itself comprises hundreds or thousands of individual sub-processors or processing modules (also not shown in this figure) which read, process and write data to the data records passing through. A more detailed description of how the data records interact with the sub-processors or processing modules within the main processing block 8 will be provided later with reference to Figure 2. Upon exiting the main processing block 8, the data records are passed to the logging module 10 (another component of the latency measuring system), where information relating to the processing carried out for each data record is extracted (logged), along with the corresponding timestamp information for every event that occurred.

The information extracted by the logging module 10 is stored in the data store 4 in real time. However, the latency analysis module 5 which is in operative communication with the data store 4 analyses the stored data offline (not in real time). The offline latency analysis module 5 utilises this extracted information to calculate the time that was taken by each data record to travel through the main processing block, and hence obtain a measurement of the latency associated with that path taken by the data record. This latency information is compared against historical data information (or against expected latency values for a particular path) that is retrieved from the data store 4, to identify any latency issues arising along specific paths within the main processing block 8. If any instances of increased latency are identified, the offline latency analysis module 4 can provide feedback commands 11 to the data stream input 6 instructing it to carry out certain actions aimed at decreasing latency (e.g. selecting a different data stream input to decrease the frequency with which data records are input to the main processing block). Alternatively, as is more frequently the case, the offline latency analysis module 5 raises an alarm such that a human operator can review the results and if possible take remedial action.

It will be appreciated that there may be thousands of data records passing through the main processing block 8 at any given time; each sub-processor can be configured to write a timestamp and a unique identifier associated with that sub-processor to the data record to provide a log of all interactions between the sub-processors and the data record, and the time at which the interaction occurred. As data records are often processed by multiple sub-processors, each data record stores a list of timestamps and identifiers which all need to be analysed to determine latency. The cumulative result of thousands of data records being processed by tens or even hundreds of sub-processors per second means that the volume of information that is stored in the data store and subsequently processed by the offline latency analysis module is enormous, and therefore a large processing and storage capability is required. The offline latency analysis module 5 and its associated data store 4 are therefore located remotely from the processor box 1 (for example, on a separate server), so as to avoid slowing down the processing of data records as they pass through the processor box. It is therefore necessary for the latency analysis and calculations to always be carried out offline (i.e. not in real time) as the amount of time required to process that volume of data is huge.

It should be noted that as a typical complex data processing network usually comprises multiple interconnected processor boxes, it is possible for the latency measuring system to be implemented such that each processor box has a latency analysis module associated with it. Additionally or alternatively, an overall latency analysis module may be provided at the end of the network which analyses the cumulative information extracted from the data records after they have passed through the entire network, providing an overall picture of the network latency. Such overall latency analysis modules will suffer even more from delayed processing times due to the huge volumes of data analysed.

A more detailed description of the main processing block will now be provided with reference to **Figure 2****.**

The main processing block 8 comprises an input gateway 12 for receiving data records, an output gateway 14 for outputting data records to downstream components of the data processing network, as well as multiple sub-processors or processing modules 16a-e (labelled A to E in the figure) in between the two gateways which read, extract and analyse information from incoming data records; information may also be written to the data records by these sub-processors 16a-e. Each of the sub-processors 16a-e effectively corresponds to a state machine and there are multiple permutations of mapping between the input data records for each sub-processor and the output data records (if any) from that sub-processor, depending on the properties of the input data records and the type of processing that is carried out by each sub-processor.

The incoming data records are typically provided in one of three formats, depending on the data provider that generated the data record and the type of information that is intended to be contained in the data record. Examples of the different formats of data records are shown in **Figure 3** and are labelled A, B and C. Each data record 20a, b, c comprises at least the following information - a format identifier (ID) 22a, b, c which enables identification of the format of the data record, and a plurality of data fields 24a, b, c that are each populated with different parameter values depending on the format of the data record. Some of the data fields may be common across all formats of data record, whereas others may be specific to a particular data record format.

The path travelled through the main processing block 8 by a particular data record, represented in Figure 2 by the lines drawn between sub-processors 16a-e, may be wholly or partly determined by the format of the data record, and/or by dynamic conditions which are linked to values contained within the data records themselves or are based on external conditions (e.g. the time of day, or the presence of external input data streams). For example, a data record with a first format may enter the main processing block 8 and be processed by sub-processors A and C before being transmitted to the logging module 10 (as indicated by the solid line path between the relevant components); another data record with a second format may travel one of two routes within the main processing block 8 - either between sub-processors A, B and D or between sub-processors A, B and C (both paths indicated by dashed lines), where the choice between sub-processors C and D is arbitrary.

It will be noted that there is no one-to-one correspondence between the number of data records input to, and the number of data records that are output from each sub-processor 16a-e and indeed from the main processing block 8 - the paths travelled by some of the data records through the main processing block terminate prior to the output gateway 14, and some input data records are therefore subsumed within the main processing block 8 and are never output to the logging module 10. Accordingly, the number of input data streams is always different to the number of output data streams.

It may therefore be seen that the path of any one data record through the main processing block 8 is complicated and each data record may be affected by delays occurring at several different sub-processors. The exact path travelled by each data record is also not entirely predictable as there may be several sub-processors capable of performing a particular processing function for a specific format of data record (this design is for redundancy purposes), but only a subset of these will be utilised for any given data record. In order to accurately assess the latency of the entire main processing block, pinpoint the cause of any increased latency at specific sub-components and therefore determine the appropriate action that needs to be taken, the latency analysis module 5 and its associated data store 4 must keep a record of all the possible paths that each data record may take through the main processing block 8. This includes keeping a log of all of the possible combinations of sub-processors 16a-e that can interact with a particular format of data record, and analysing all of the resultant information extracted from each data record to determine which path was travelled and therefore pinpointing the root cause of the delay to a data record.

Alternatively or additionally, each sub-processor 16a-e may apply a timestamp to every record that it processes; the timestamps for every record are extracted by the latency analysis module 5 and analysed to plot the course of the data record through the main processing block 8, and the latency associated with each individual sub-processor 16a-e.

As previously mentioned, it is clear that the volume of data that must be processed by the latency analysis module and stored by the data store is enormous, meaning that the latency analysis must take place offline and the latency analysis module 5 and data store 4 must be located remotely from the processor boxes. Furthermore, due to the typical size (in the order of multiple terabytes of information) of the resultant data sets that must be analysed to obtain an accurate picture of the latency at each point and along each path travelled in the main processing block, the analysis time required is extremely long. The latency analyses would therefore not be able to be performed quickly enough to effect changes in real-time and address latency issues as they arise. As an illustrative example, one known data processing unit (processor box) comprising at least 20 individual processing modules (or sub-processors) receives 5.2 billion data records in a single day. Each processing module writes at least 10 bytes of timestamp and identification data to every data record with which it interacts. The total volume of data that must be processed every day during latency analysis is therefore of the order of several terabytes for every data processing unit (or processor box) within the network.

In other words, current known systems for measuring and addressing latency issues in data processing networks are reactionary only, and will therefore always be attempting to fix problems after they have arisen. Such systems will effectively only be able to carry out 'damage limitation'. Furthermore, such latency measuring systems are intrusive: all of the outgoing data records are processed by the logging module 10 so as to extract timestamps and processing path information, and therefore there is the risk that additional delays may be introduced into the network by a processing backlog at the logging module. This is also in part due to the fact that many of the data processing units (processor boxes) used in the data processing networks are legacy systems - the processing takes places effectively within 'black boxes' such that it is not possible to alter the methods of processing or of writing information to the data records in order to decrease the analysis time required. In addition, processing of the data records in the logging module 10 may result in the introduction of an error into the data records; this error may subsequently be propagated through to the end users - the data receivers - if left unchecked. A rigorous quality assessment step will also likely need to be carried out, which will increase the processing time.

WO 2015/126301 A1 describes a method in a mixing unit for mixing received data packets from a plurality of data streams, wherein the method includes the steps of receiving decoded data packets and their timing information, which timing information comprises at least a determined maximum waiting time for each decoded data packet, optimizing a waiting time for a subsequent mix of data packets based on the timing information, and mixing at least a subset of the decoded received data packets based on the optimized waiting time.

US 2009/287628 A1 describes a method and system for hardware-accelerating various data processing operations in a rule-based decision-making system such as a business rules engine, an event stream processor, and a complex event stream processor. Preferably, incoming data streams are checked against a plurality of rule conditions. Among the data processing operations that are hardware-accelerated include rule condition check operations, filtering operations, and path merging operations. The rule condition check operations generate rule condition check results for the processed data streams, wherein the rule condition check results are indicative of any rule conditions which have been satisfied by the data streams. The generation of such results with a low degree of latency provides enterprises with the ability to perform timely decision-making based on the data present in received data streams.

US 2011/280137 A1 describes an apparatus, a machine readable media, and methods for testing a network. The apparatus may include a statistics engine coupled to a memory. The statistics engine may extract a packet group identifier (PGID) from a packet received from the network and retrieve traffic statistics associated with the PGID from the memory. The retrieved traffic statistics may include a packets-per-interval count and a packets-per-interval threshold, the packets-per-interval count indicating a number of packets received within a time interval of a sequence of time intervals. At the start of each new time interval, the statistics engine may set a flag indicating whether or not the packets-per-interval count for the previous time interval was equal to or greater than the packets-per-interval threshold. The flag may be saved in the memory as part of the traffic statistics associated with the extracted PGID.

The present invention seeks to address or at least substantially reduce the above-described problems with the prior art systems.

### SUMMARY OF THE INVENTION

According to one aspect of the present invention, there is provided a control system for controlling the operation of a data processing unit, the data processing unit receiving a first plurality of input streams of data records from different data providers and comprising a group of interconnected processing modules through which the input streams pass to generate a second plurality of output streams of processed data records, wherein the first and second pluralities are different, the control system comprising: an input control module for inputting each of the received input streams into the data processing unit, each input stream having a remotely-defined data format which is associated with a specific subset of the processing modules of the data processing unit, the input control module comprising: a dummy record generator for generating dummy data records to insert into the input streams; the dummy record generator being arranged to generate dummy data records with a known identifier in an immutable data field of the data record and having a format selected from one of the remotely-defined data formats; and a data stream injection module for injecting the first plurality of input streams into the data processing unit, wherein the data stream injection module is arranged to interleave a uniquely identifiable dummy record into the data records of the one of the first plurality of input streams having the same remotely-defined format as the dummy record and to repeat the interleaving of further dummy records at regular predetermined time intervals as determined by a reference clock; a data record filter for reading the immutable data field of each data record in each output stream and for identifying and separating dummy records out of the output streams which have the known identifier in the immutable data field; a latency analysis module arranged to: receive dummy data records from the data record filter; determine a current latency value of the dummy data record through the data processing unit using knowledge of when the dummy data record was interleaved into the input data stream and the time of receipt of the dummy data record using the reference clock; compare the current latency value with a previously determined latency value of a previous dummy data record to determine if there is a significant change in the latency value; use the format of the dummy record to determine which subset of processing modules of the data processing unit the latency concerns; and determine and output an appropriate feedback command for the input control module to take action to address the significant change in latency detected; wherein the input control module comprises a control processor arranged to receive the feedback command from the latency analysis module and to regulate the flow of data input streams in accordance with the feedback command.

The input control module may further comprise a timestamp generator coupled to the reference clock, the timestamp generator being arranged to generate a timestamp for insertion into the dummy record at a further immutable data field of the data record.

When an original format of the timestamp is incompatible with the format of the further immutable data field, the timestamp generator can be arranged to convert the timestamp into a new format compatible with the further immutable data field and the latency analysis module can be arranged to reconvert the read timestamp from the further immutable data field back into its original format.

The latency analysis module may be arranged to compare the latency of different dummy records relating to different subsets of processing modules; to determine where multiple subsets of processing modules have a greater latency and to determine and output a feedback command directed to addressing the latency of the multiple subsets of processing modules. Furthermore, when the subsets overlap, the latency analysis module can be arranged to use this to determine more precisely the location of any increase in latency.

The latency analysis module may be arranged to store the latency values of each dummy record in a results data store grouped according to the format in which the dummy data record was received.

The latency analysis module may be arranged to compare the current latency value with a previously determined latency value of a previous dummy data record to determine if there is a significant change in the latency value after a predetermined time period has lapsed or after a predetermined number of dummy data records have been analysed.

Preferably the latency analysis module is arranged to generate a feedback command that causes the control processor to throttle a particular format of data record.

In some embodiments, the dummy record generator and the input control module are arranged to generate dummy data records and insert them into the input streams according to a predetermined timing period which is different for different input streams. In other embodiments, the dummy record generator and the input control module are arranged to generate dummy data records and insert them into the input streams at different timing offsets to each other.

Preferably each dummy data record comprises a data record format identifier.

The system may further comprise a format data store coupled to the input control module for storing a set of remotely-defined formats and a set of rules determining how dummy data records are generated from the stored data formats by the dummy record generator.

The control system can be arranged to control a plurality of data processing units arranged in an interconnected network and the system further comprises a plurality of data record filters each being provided at the output of a respective data processing unit.

Preferably the latency analysis module is arranged to send feedback commands to the outputs of the data processing units to control the output of the output streams of processed data records.

According to another aspect of the present invention there is provided a method of controlling the operation of a data processing unit, the data processing unit receiving a first plurality of input streams of data records from different data providers and comprising a group of interconnected processing modules through which the input streams pass to generate a second plurality of output streams of processed data records, wherein the first and second pluralities are different, the method comprising: inputting, by an input control module, each of the received input streams into the data processing unit, each input stream having a remotely-defined data format which is associated with a specific subset of the processing modules of the data processing unit, the inputting step comprising: generating dummy data records to insert into the input streams; the dummy data record generating step generating dummy data records with a known identifier in an immutable data field of the data record and having a format selected from one of the remotely-defined data formats; and injecting the first plurality of input streams into the data processing unit, wherein injecting step comprises interleaving a uniquely identifiable dummy record into the data records of the one of the first plurality of input streams having the same remotely-defined format as the dummy record and repeating the interleaving of further dummy records at regular predetermined time intervals as determined by a reference clock; reading, by a data record filter, the immutable data field of each data record in each output stream and identifying and separating dummy records out of the output streams which have the known identifier in the immutable data field; analysing the dummy data records, the analysing step comprising: receiving dummy data records from the data record filter; determining a current latency value of the dummy data record through the data processing unit using knowledge of when the dummy data record was interleaved into the input data stream and the time of receipt of the dummy data record using the reference clock; comparing the current latency value with a previously determined latency value of a previous dummy data record to determine if there is a significant change in the latency value; using the format of the dummy record to determine which subset of processing modules of the data processing unit the latency concerns; and determining and outputting an appropriate feedback command for the input control module to take action to address the significant change in latency detected; wherein the inputting step comprises receiving the feedback command and to regulating the flow of data input streams in accordance with the feedback command.

### BRIEF DESCRIPTION OF THE DRAWINGS

**Figure 1** is a schematic block diagram showing a system for measurement of latency in a network that handles and processes data streams, and a portion of the environment in which the system operates;
**Figure 2** is a schematic block diagram showing additional details of the main processing component of the system of Figure 1;
**Figure 3** is a schematic diagram illustrating example structures of different formats of data records which may be comprised within the data streams handled by the system of Figure 1;
**Figure 4** is a schematic block diagram of a control system according to an embodiment of the present invention and the environment in which the control system operates;
**Figure 5** is a schematic block diagram of a portion of the control system of Figure 4, showing further details of an example input control module that may be used for controlling and generating input data;
**Figure 6** is a schematic diagram illustrating example structures of different formats of dummy data records generated by the input control module of Figure 6, according to an embodiment of the present invention;
**Figure 7** is a schematic block diagram of a portion of the control system of Figure 4, showing further details of an example latency analysis module that may be used for calculating system latency;
**Figure 8** is a flowchart showing an overview of the general method of operation of the control system of Figure 4;
**Figure 9** is a flowchart showing details of a method for generating dummy data records utilised by the input control module of Figure 6, according to an embodiment of the present invention;
**Figure 10** is a flowchart showing details of a method for distinguishing between genuine and dummy data records used by the control system of Figure 4;
**Figure 11** is a flowchart showing details of a method for measuring latency and determining whether to take action, used by the control system of Figure 4; and
**Figure 12** is a schematic block diagram showing an overview of the control system of Figure 4 implemented in a large-scale data processing network, according to an embodiment of the present invention.

### DETAILED DESCRIPTION

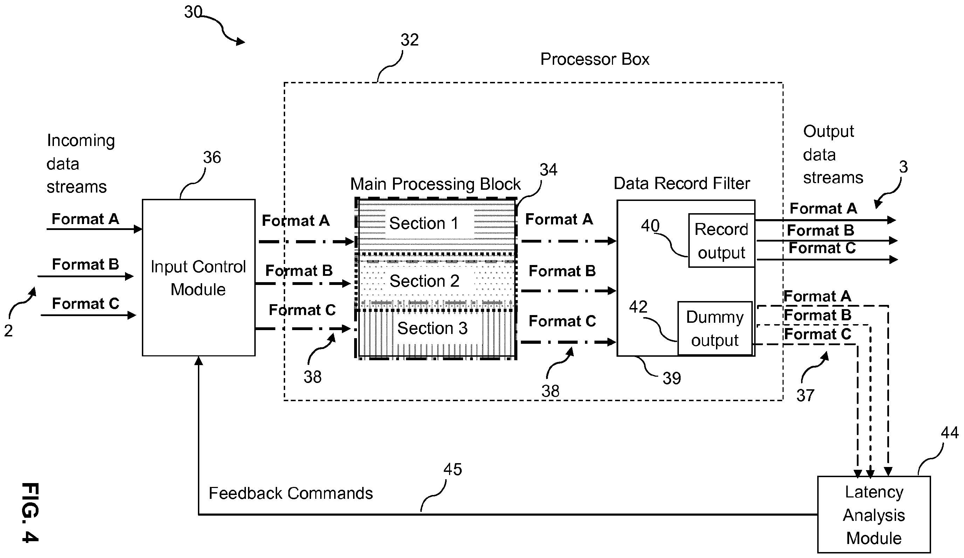

Referring to **Figure 4****,** a control system 30 for measuring latency according to an embodiment of the present invention will now be described. The system of the present embodiment has a similar configuration to that described in the prior art system (shown in Figure 1), although it operates in a very different manner. The overall objective of the system is the same as that of the prior art system described previously - to measure the latency of a data processing network in which this system is implemented and to take controlling action accordingly if instances of increased latency are detected - and the passage and processing of data records through the network is largely unchanged. However, the actual mechanism by which latency measurements are made and the detailed configuration and implementation of the control system of Figure 4 are different. To avoid unnecessary repetition, the following description will focus on these differences.

As with the prior art system described earlier, the incoming data streams 2 (comprising a stream of data records received over time) are provided to the processor box 32; the data records are processed by the main processing block 34 (which is substantially the same as the main processing block 8 shown in Figure 2) and subsequently output to the next component in the network (e.g. other processor boxes or to an overall network output). However, the system of Figure 4 comprises an input control module 36 that is configured to generate dummy data records 37 that are capable of passing through the main processing block 34 in a similar manner to the genuine data records 2 received from the data providers without the main processing block 34 being able to distinguish between the two types of records. Different formats of dummy data records 37 are generated by the input control module 36 to match the formats of the incoming data records 2 (described in Figure 2); the incoming data records 2 from the data providers will henceforth be referred to as genuine data records to distinguish them from the dummy data records generated by the control system. The generated dummy data records 37 are injected at regular pre-determined intervals into the flow paths of their corresponding data streams (for example, the dummy data records may be injected into the corresponding data streams once per second). The dummy data records are therefore interleaved with the genuine data records of the corresponding format as they are transmitted to the processor box to produce a mixed input data stream 39 of each format. This ensures that the two types of data records 36, 37 will be indistinguishable from one another, and that any latency fluctuations experienced by the genuine data records will also be recorded by the dummy data records.

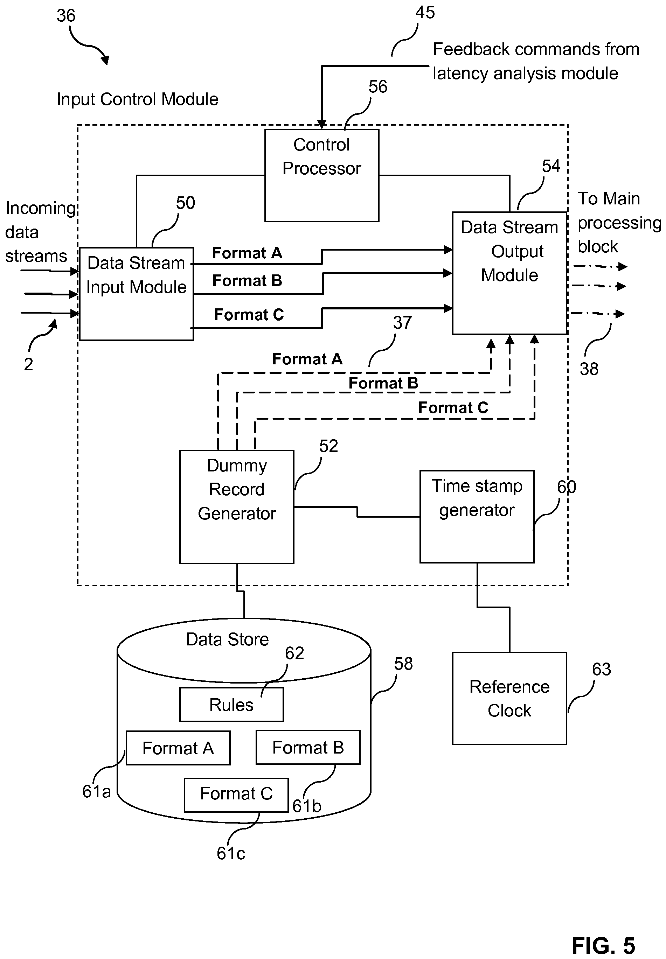

The dummy data records enter the main processing block 34 via the same inputs as those genuine data records which have a corresponding format to the data stream that they are placed in, and follow similar paths through the main processing block 34. Further details of the generation of these dummy records will be provided later with reference to Figures 5 to 7. For ease of reference, the flow paths of the genuine data records 2 are illustrated in this figure (as well as in all subsequent figures) by solid line arrows whilst the flow paths of the dummy data records 37 are illustrated using dashed line arrows. In some cases, where the dummy and genuine data records follow the same flow paths (where the genuine and dummy data records are interleaved with one another), the effective flow paths of the mixed data stream 38 comprising the two types of records are illustrated using dot-dash line arrows.

The processor box of Figure 4 also comprises a data record filter 39 which is able to distinguish between the dummy data records 37 and genuine data records 2 received from the main processing block 34. The data record filter 39 has two separate outputs - a genuine data record output 40 and a dummy data record output 42. The data record filter 38 is configured to identify the dummy data records 37 and extract them from the incoming data streams 38; the genuine data records 2 are subsequently output to downstream components via the genuine data record output 40 and the dummy data records 37 are output to the latency analysis module 44 via the dummy record output 42. Subsequently, the dummy data records 37 are analysed by the latency analysis module 44 and their associated latency values are calculated. Based on the results of these latency analyses, feedback commands 45 are sent to the input control module 36 to take the appropriate action. Such actions may include automatically switching to a data stream with a lower data arrival rate, or automatically decreasing the output rate of one or more input data streams from the input control module 36 to the processor box 32.

It may therefore be seen that the control system of Figure 4 has decreased the amount of data that needs to processed by the latency analysis module 44 - instead of having to process every single data record passing through the system, only the dummy data records 37 are processed. For systems which receive thousands of data records 2 per second from each data provider, the processing of dummy data records (which may only be generated once per second) represents a thousand-fold decrease in the processing power and storage space that is required by the latency analysis module. The latency analysis may therefore be carried out much more quickly, and hence the control system may detect and respond to latency increases much more rapidly.

It has also been found by the Inventors that data records of a particular format will typically only pass through a certain sub-section of the main processing block 34 - for example, Format A data records may only pass through Section 1 of the main processing block 34; Format B data records may only pass through Section 2 of the main processing block 34 and Format C data records may only pass through Section 3 of the main processing block 34. Each format of dummy data record will therefore be able to provide latency information about a particular section of the system, and hence identification of the format of dummy data record which shows an increased latency allows the latency analysis module 44 to easily pinpoint the section of the main processing block 34 that is experiencing processing delays.

It should be noted that while the cumulative coverage of all sections encompasses all of the sub-processors within the entire main processing block, the sections highlighted in the main processing block 34 of Figure 4 are not physically separate and mutually exclusive but can have some overlap - some of the sub-processors (or processing modules) 16a-e may belong in more than one section as they may be capable of processing more than one format of data record. It is therefore possible for the latency associated with some of the sub-processors to be measured using two or more dummy data record formats. An additional advantage that is therefore achieved by this overlapping of sections in the main processing block 34 (and their constituent components) is that the source of any latency issues can be pinpointed more accurately.

It has also been found that the latency analyses by the present control system, which highlight particular sections of a main processing block 34 with increased latency, are able to achieve a sufficient level of accuracy to enable network latencies to be managed effectively. The additional precision provided by analysing every single possible data processing path through a particular data processing unit does not make an appreciable difference to the effectiveness of the latency handling, and the huge time- and space-savings achieved by the system of the present invention more than compensate for any differences in efficacy.

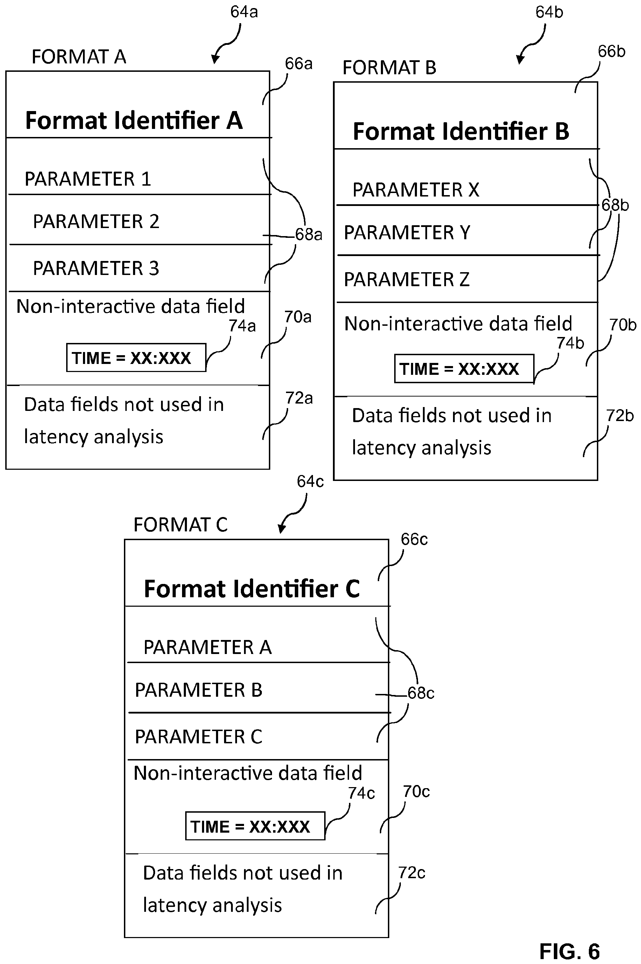

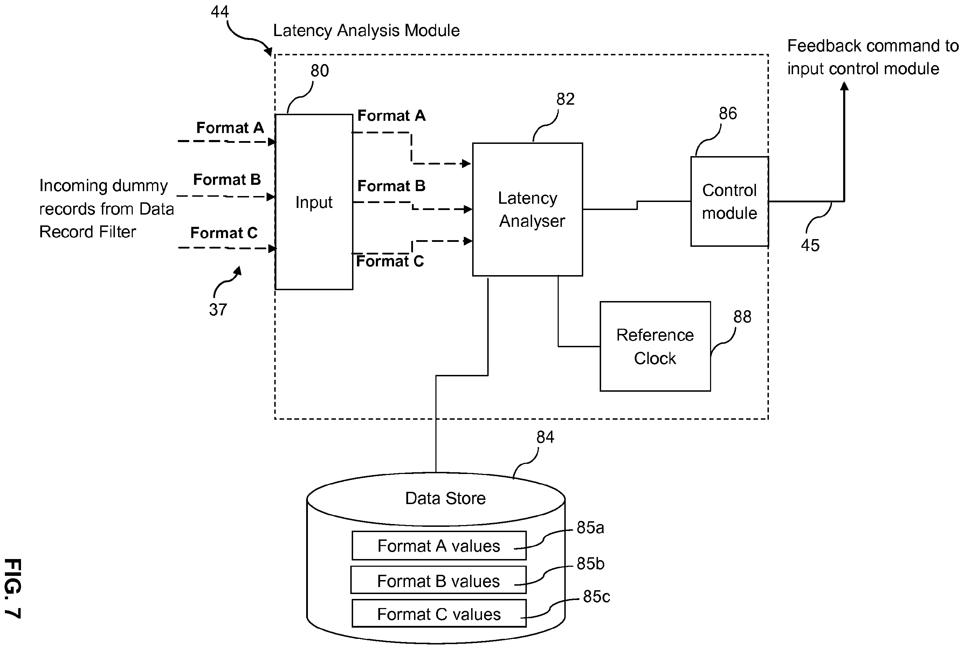

The input control module 36 and latency analysis module 44 are shown in greater detail in **Figures 5** **and** **7** respectively, and examples of the dummy data records that are created in the input control module 36 and analysed by the latency analysis module 44 are shown in **Figure 6****.**

The input control module 36 of **Figure 5** comprises a data stream input module 50 for receiving incoming data streams 2 from the data providers, and a dummy record generator 52 for generating the dummy data records 37. The data stream input module 50 and the dummy record generator 52 are both separately in operative communication with a data stream output module 54. According to an embodiment of the present invention, upon arrival at the data stream output module 54, the data record formats in each incoming data stream 2 are identified and the data records are subsequently output via separate output gateways (not shown) to the main processing block 34. The input control module 36 also comprises a control processor 56 which is in operative communication with the data stream input and output modules 50, 54 - the control processor 56 is configured to accept feedback commands 45 from the latency analysis module 44 and to take appropriate actions to decrease latency. In some instances, the control processor 56 may be configured to send a command to the data stream input module 50 to stop accepting certain formats of incoming data, or to switch to receiving incoming data from a different data provider with a lower data arrival rate; in other instances, the control processor 56 is configured to send a command to the data stream output module 54 to throttle some or all of the data output to the main processing block 34 (i.e. to decrease the frequency with which data records of a specific format are provided to the main processing block 34).

The dummy record generator 52 is configured to generate dummy data records 37 of different formats (corresponding to the formats of the incoming data records), and to provide dummy data records at regular intervals to the data stream output module 54, so that they may be injected into the data stream with the corresponding format and output as interleaved data streams 38 of the relevant formats via the corresponding output gateway to the main processing block 34.

In some embodiments, the frequency with which dummy data records of different formats are generated differ (e.g. Format A records may be generated at one second intervals while Format B records are generated at two second intervals). Additionally or alternatively, the frequency of generation of dummy data records may be the same for all data formats but the generation timing cycles may be out of synchronisation or offset from one another by a certain amount (e.g. the Format A records are generated every minute on the minute whereas the Format B data records are generated on the thirty-second mark).

The dummy record generator 52 is in operative communication with a data store 58 and a timestamp generator 60. The data store 58 contains stored templates 61a, b, c for each format of dummy data record that is to be generated and rules 62 relating to the generation of the dummy data records. These templates 61a, b, c are pre-loaded into the dummy record generator 52 so that a dummy data record of a particular format can be quickly and easily generated; however, in the event that a new format of dummy data record is required (e.g. if a new data stream is to be input to the processor box), the requisite formats and rules may be retrieved by the dummy record generator 52 from the data store 58. The timestamp generator 60 is also in operative communication with a reference clock 63 and is configured to generate a timestamp (based on the time obtained from the reference clock 63) whenever a new dummy data record is generated, and to provide this timestamp to the dummy record generator 52 for insertion into the newly-generated dummy data record.

Example data structures corresponding to the different formats of dummy data records that may be generated are shown in **Figure 6****.** Each dummy data record 64a, b, c is intended to mimic the genuine data records with the corresponding format, and every dummy data record 64a, b, c comprises the following information:
(a) a format identifier 66a, b, c provided in an immutable data field which is used by the data stream output module 54 and the main processing block 34 to identify the format of the dummy data record and thereby ensure that the dummy data record is transmitted along the same paths and processed in the same manner as the genuine data records with the same format;
(b) a plurality of 'useful' data fields 68a, b, c, corresponding to data fields that are required for the main processing block 34 to treat the dummy data record in the same manner as a genuine data record - the values in these fields (labelled as Parameters 1 to 3, X to Z and A to C in the figure) are read by the sub-processors 16a-e in the main processing block 34 and used during processing;
(c) at least one 'non-interactive' or further immutable data field 70a, b, c corresponding to a data field which must be present for the data record to accurately mimic the structure of the genuine data record but for which the values are never read or processed by the main processing block 34;
(d) one or more 'non-useful' data fields 72a, b, c which are present in genuine data records of a corresponding format but are not required for the purposes of latency analysis (i.e. do not need to interact with or be read by the main processing block 34 for it to be treated as a genuine data record).

The dummy record generator 52 populates the 'useful' data fields 68a, b, c with representative parameter values (e.g. parameter values within a certain range which will be accepted by the main processing block 34 as being within an expected range of possible values), and either does not populate the 'non-useful' data fields 72a, b, c with any parameter values or populates them with null values, as they will not be involved in the processing carried out by the main processing block. The timestamp generator 60 provides (pushes) a timestamp to the dummy record generator 52 which inserts the timestamp 74a, b, c into the 'non-interactive' data field 70a, b, c in place of those parameters with which the data field would usually be populated. It is advantageous to insert the timestamp 74a, b, c into a non-interactive data field 70a, b, c, as it is known that such a field is immutable in that it will always be present in the dummy data records but the timestamp information will not be read or otherwise processed by the main processing block 34 and the timestamp information will therefore pass through the system undistorted.

The latency analysis module 44 shown in **Figure 7** comprises an input 80 for receiving the incoming dummy data records 37 from the data record filter 39, and a latency analyser 82 configured to calculate and assess the latency of each incoming dummy data record. The latency analyser 82 is in operative communication with a data store 84, a control module 86 and a reference clock 88. For every incoming dummy data record, the latency analyser 82 is configured to extract the timestamp information 74a, b, c, compare that information with a time obtained from the reference clock 88, and calculate the latency value associated with that dummy data record. The calculated latency value is then stored in the data store 84, along with latency values 85a, b, c obtained from previously-received dummy data records of the same format.

The latency analyser 82 is also configured to periodically retrieve and analyse the stored latency values and identify any trends indicating potentially undesirable increases in latency. In the event that increases in latency are detected, a feedback command 45 is sent via the control module 86 to the control processor 56 of the input control module 36 to take the appropriate action to decrease the systemic latency.

It will be appreciated that in order to carry out the latency calculations accurately, the reference clock 88 of the latency analysis module 44 must be synchronised with the reference clock 63 utilised by the input control module 36. Preferably, the input control module 36 (and its constituent dummy record generator) is in operative communication with the reference clock 88 of the latency analysis module 44 and therefore the time values may be directly compared by the latency analyser 82 without having to compensate for any timing offsets between different clocks. This is especially important where the input control module 36 and the latency analysis module 44 are located in different portions of the network.

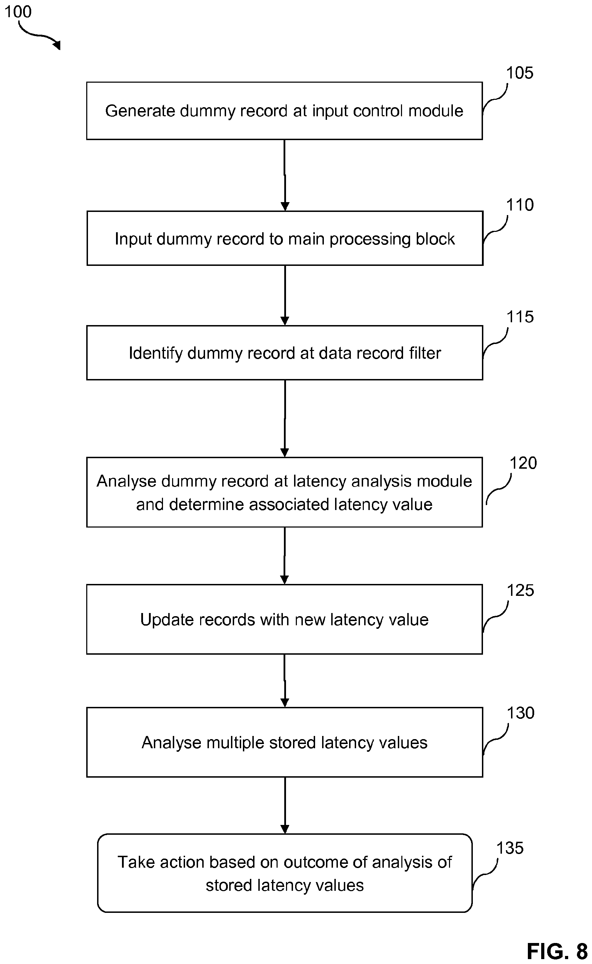

**Figure 8** provides an overview of the latency analysis method used by the system of Figure 4. The process 100 begins with the generation in Step 105 of a dummy data record by the input control module 36; this dummy data record is then provided in Step 110 to the main processing block 34 by the input control module 36 - as previously mentioned, the dummy data records 37 enter the main processing block 34 through the same inputs as those genuine data records 2 which have a corresponding format, and the two types of data records are subsequently virtually indistinguishable from one another by the main processing block 34.

After the data records 38 have passed through the main processing block 34, the dummy data records 37 are identified and separated from the genuine data records 2 by the data record filter 39 in Step 115 and the former are transmitted to the latency analysis module 44. Timestamp information is then extracted from each dummy data record and a latency value is calculated (i.e. the time taken for the dummy record to pass through the main processing block 34 is determined) in Step 120. Latency values calculated for previously-received dummy data records are stored in the data store 84, for example in the form of a table of latency values obtained over time, and these records 85a, b, c are updated in Step 125 with the newly-calculated latency values. After a certain time period has elapsed or a certain number of latency values have been stored, an automated analysis is carried out in Step 130 using the stored latency values to determine if there have been any changes in the latency values (i.e. an increase in calculated latency values over a threshold latency value) that would indicate any processing delays occurring within the main processing block, and would also allow the source of these delays to be located.

Examples of analyses that may be carried out on the stored latency values include the calculation of aggregates or of moving averages to take into account the constant updates to the stored latency values, as well as to allow any relatively long-term trends to be highlighted. This would have the advantage of allowing the latency analysis module 44 to also detect trends of slowly increasing latency which could indicate potentially-serious latency issues arising in the future if left unresolved. The system will therefore be able to take pre-emptive action to diagnose and address these issues before they manifest as long processing delays and create processing backlogs within the network. In some embodiments, the latency analysis module may also be configured to automatically generate a graphical representation of all the latency values stored over that time period either for review by a network operator, so as to allow changes in latency over a certain period of time (e.g. over the course of a day) to be monitored, and long-term latency trends to be assessed, or for automated longer term analysis such that problematic trends can be reversed by taking some automated corrective action.

Once a processing delay has been detected, the latency analysis module 44 is configured in Step 135 to determine the root cause of the problem, decide upon the most effective course of action to decrease the latency, and to send feedback commands 45 to the input control module 36 to take action accordingly. The latency analysis module 44 may instruct the input control module 36 to switch to data streams from a different data provider that have a lower rate of arrival of data records; alternatively, if the latency within the main processing block 34 as a whole is very large (i.e. all of the dummy data records are experiencing delays in processing), the latency analysis module 44 may instruct the input control module 36 to cease sending any further data records to the main processing block 34 until the backlog of data records to be processed has been cleared. Furthermore, as the format of the data records corresponds to a certain sub-section of the main processing block 34, if only one format of dummy data record is found to have an increased average latency, indicating that a particular section of the main processing block 34 is overloaded or malfunctioning, the latency analysis module 44 may instruct the input control module 36 to only take action in respect of data streams that correspond to that particular format. The actions that may be instructed by the latency analysis module 44 can therefore be targeted to specific portions of the main processing block 34 and to particular data streams.

In one embodiment, some formats or types of data record are known to be of greater importance than others - it may be more important (even vital) to provide a certain format of data record to the data receiver than other formats of data records. In these embodiments, the latency analysis module 44 may utilise this fact to select a particular format of data record to throttle which has a high data throughput rate but is known to be of lesser importance. Furthermore, due to the aforementioned overlap of sections within the main processing block 34, throttling a particular format of data record in this manner may improve the latency in multiple sections.

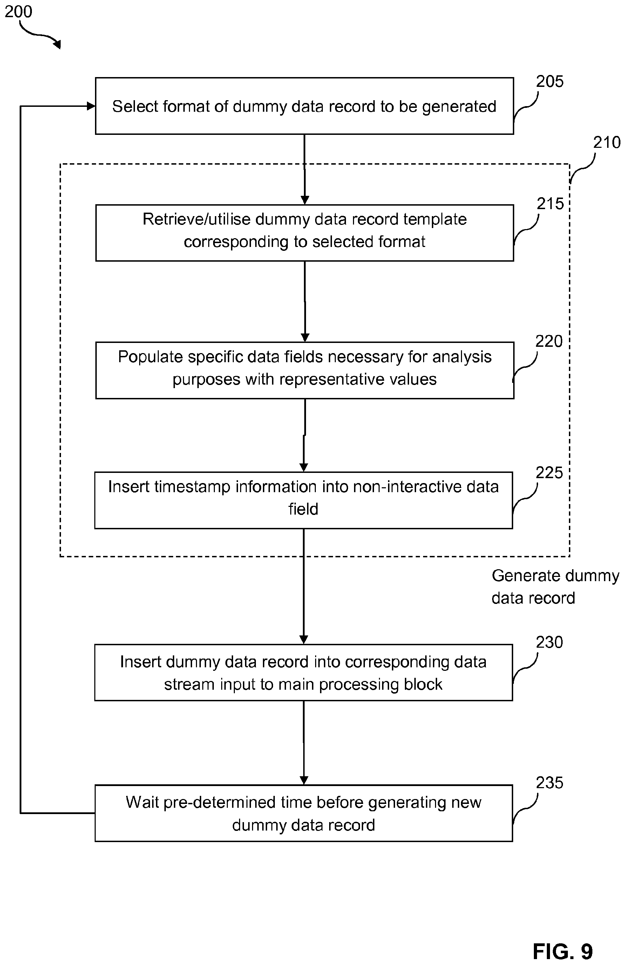

A more detailed description of the process used by the input control module 36 to generate the dummy data records will now be provided with reference to **Figure 9****.**

The process 200 begins with the selection in Step 205 of the format of dummy data record that is to be generated. In some embodiments, the dummy record generator 52 may be programmed with instructions to cycle through all possible formats of dummy data record at regular intervals. In other words, the dummy record generator 52 may initiate the generation of Format A, B and C dummy data records in turn at pre-determined intervals that are offset from one another. For example, the Format A records may be generated every minute on the minute whereas the Format B data records may be generated on the twenty-second mark of each minute and the Format C data records may be generated on the forty-second mark of each minute. Alternatively, in some embodiments, the dummy record generator 52 may generate the dummy data records of each format independently and in parallel, but each format of dummy data record may have a different generation frequency.

Furthermore, in some embodiments, the generation frequency of certain formats of dummy data records may be varied throughout the course of operation of the system. For example, if more records of a particular format pass through a particular section of the main processing block 34, the generation frequency of dummy data records with the corresponding format may be increased to give a more accurate picture of the latency associated with that section of the system. It should be noted that as the ratio of the number of dummy data records 37 to genuine data records 2 passing through the system at any one time is so small, the system processing overhead associated with generating a greater number of dummy data records and increasing the frequency of their input is minimal, and is practically undetectable at an overall system level.

Once the format of a dummy data record to be generated has been decided upon, in Step 210 the dummy record generator 52 follows pre-programmed instructions to generate the dummy data record, corresponding to the selected format, with the requisite data fields and format identifier. In some embodiments, the dummy record generator 52 generates the dummy data record in real time each time; in other embodiments, the dummy record generator 52 retrieves in Step 215 a template 61a, b, c corresponding to the appropriate dummy data record format from the data store. Additionally or alternatively, these templates are pre-loaded into the dummy record generator 52 and the dummy record generator 52 merely selects in Step 215 the template with the appropriate format identifier whenever a new dummy data record is required to be generated.

The dummy record generator 52 next populates in Step 220 the fields of the dummy data record with appropriate parameter values - the 'useful' data fields 68a, b, c are populated with representative parameters values that will be indistinguishable by the sub-processors of the main processing block 34 from those parameter values found in genuine data records. These parameter values may be randomly selected from a range of expected possible values and may vary each time a dummy data record is produced. Alternatively, if the dummy data record templates are pre-loaded into the dummy record generator 52, as is frequently the case, these data fields may already have been pre-populated with representative parameter values which remain the same for every dummy data record of that format that is generated. The 'non-useful' 74a, b, c data fields are either left blank or may be randomly populated (e.g. with null or extremely large values, for convenience) as these data fields will not interact with the main processing block 34 as the dummy data record passes through it, and therefore their exact value is unimportant.

Once the dummy data record has been generated and its data fields have been populated, the dummy record generator 52 obtains in Step 225 a timestamp 74a, b, c from the timestamp generator 60 and inserts it into a particular data field which has previously been flagged as being a 'non-interactive' or further immutable data field 70a, b, c (i.e. the values contained in this data field will not be extracted or utilised for analysis, nor will any additional values be written to this data field, over the course of the record's path through the main processing block). This ensures that the timestamp information 74a, b, c that is to be contained within this data field remains undistorted by any interactions within the main processing block, and can be reliably retrieved by the latency analysis module 44 from the dummy data record once it has passed through the main processing block 34.

In some embodiments, the parameters which were originally intended to be used to populate the chosen 'non-interactive' data field 70a, b, c are typically expressed in a format which is incompatible with a time format (for example, a chosen data field may only accept floating point numbers, and timestamp values expressed in minutes and seconds would be incompatible with this format). As the genuine data records upon which the dummy data records are to be based are produced by the data providers and hence their format is outside the control of the data processing network and of the control system 30, it is not possible for the dummy record generator 52 to easily and quickly alter the format of the data field into which the timestamp is to be inserted. In such cases, the timestamp information must be converted or otherwise re-expressed/encrypted to generate a representative floating point number for insertion into the chosen data field.

In some embodiments, it may be the case that a particular format of data record does not contain any non-interactive data fields 70a, b, c. In such cases, the input control module 36 will be aware of any coordinate transforms that the parameters in a chosen field will be subject to, and the dummy record generator 52 may therefore carry out a pre-manipulation (reverse engineering) step by applying the reverse coordinate transform to the timestamp before inserting it into the chosen data field. When the timestamps 74a, b, c are subsequently retrieved by the latency analyser 82 after undergoing the relevant coordinate transformation, the timestamp 74a, b, c will be in the desired format and will not require any post-processing to be carried out by the latency analyser 82.

When the dummy data record generation process 210 is complete, the dummy record generator 52 forwards the dummy data record to the data stream output module 54, where the format identifier of the dummy data record is read and the dummy data record is inserted in Step 230 into the data stream 38 of the corresponding format that is being output to the main processing block 34. The dummy data record thus leaves the input control module 36 and enters the main processing block 34, where it passes through the corresponding section of main processing block 34 according to its format, interacting with the respective sub-processors (or processing modules) 16a-e along the way. After providing the dummy data record to the data stream output module 54, the dummy record generator 52 waits in Step 235 a pre-determined period of time before generating a new data record of the same format.

This process 200 is repeated for every format of dummy data record that is generated by the input control module.

All data records (both dummy and genuine) 38 that have passed through the main processing block 34 must pass through the data record filter 39 before they can leave the processor box 32; this is to enable the control system 30 to separate the dummy data records 37 from the genuine data record 2s, to ensure that latency analysis is only carried out using the former type of record.

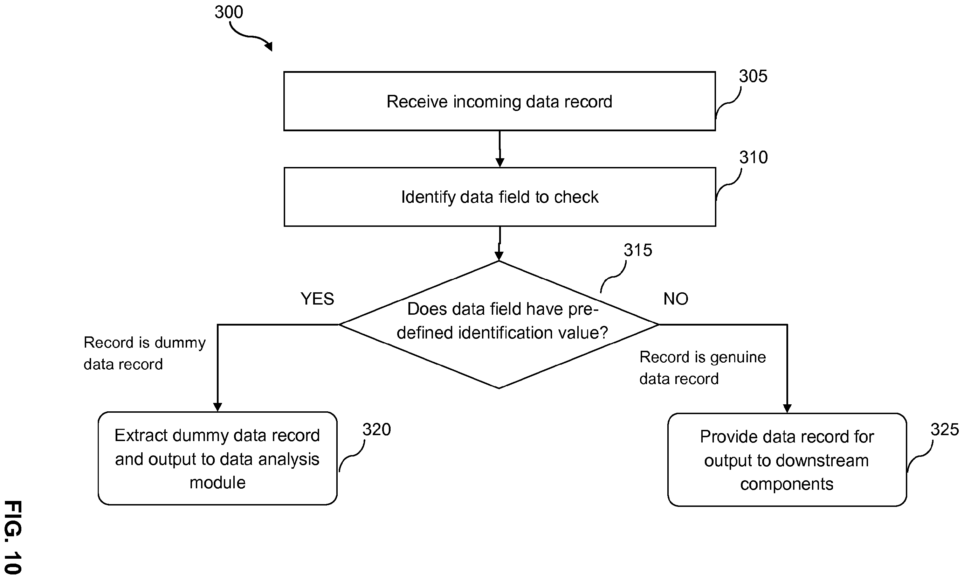

The process by which the data record filter 39 separates the dummy data records from the genuine data records 2 will now be described with reference to **Figure 10****.** The process 300 begins with the data record filter 39 receiving in Step 305 an incoming data record from the mixed data streams 38 and identifying in Step 310 a particular data field which is used to distinguish between the dummy and genuine data records. The information in this identified data field will be checked in Step 315 to ascertain if it contains a flag indicating that the record under consideration is a dummy data record - for example, the data field may contain a specific value or parameter indicating that the record is a dummy data record. In some embodiments, the dummy record generator 52 may have set the value of one of the non-useful data fields to be a specific value (which remains constant for every dummy data record that is generated and may be constant across all formats of dummy data record, albeit entered into different 'non-useful' data fields for each data record format). This value should be easily recognisable by the data record filter 39, and ideally would not be a value that could possibly be contained in that data field for a genuine data record 2. Alternatively, as is more frequently the case, the dummy data records (as with all data records) each have a unique identifier associated with them (i.e. a record ID). The record IDs of each dummy data record that is generated are known to the data record filter 39, which can therefore identify the relevant 'record ID' data field, extract the record ID and compare it with known dummy data record IDs to identify the dummy data records.

If the data record filter 39 determines in Step 315 that the selected data field contains a parameter corresponding to the pre-defined specified value (e.g. the data record ID matches a value known to correspond to that of a dummy data record), the data record filter 39 identifies this record as a dummy data record and extracts it from the incoming data stream 38 in Step 320, forwarding it to the latency analysis module 44. If the data record filter 39 determines in Step 315 that the selected data field does not contain the expected identifying parameter value (i.e. the record ID does not match any of the pre-defined record IDs which are known to be associated with dummy data records), the data record filter 39 identifies that data record as being genuine and outputs the data record in Step 325 to subsequent downstream components. These may be other data processing units or processor boxes in the network, or the final end-users of the data streams (i.e. the data receivers).

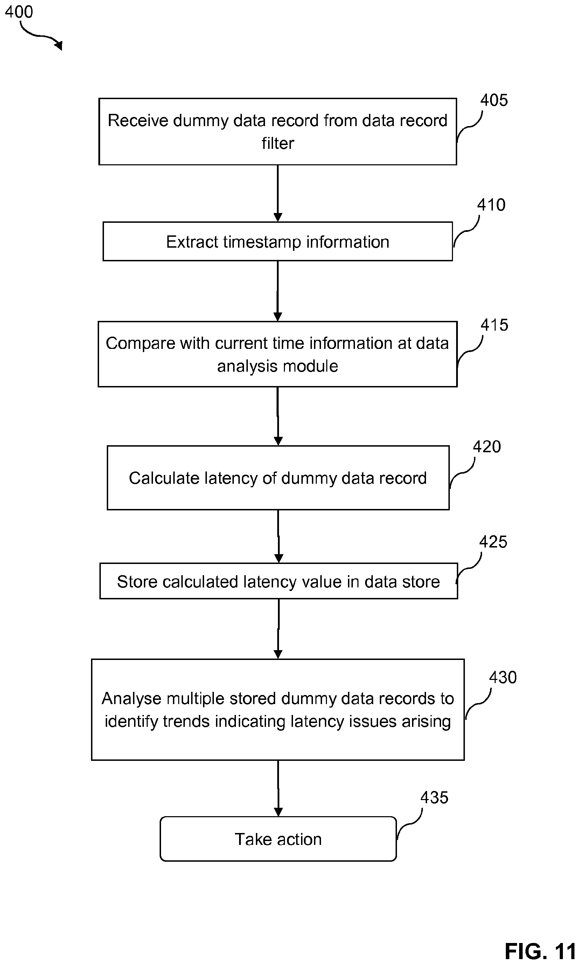

The latency analysis process carried out by the latency analysis module 44 will now be described in greater detail with reference to **Figure 11****.** This process 400 begins with the receipt in Step 405 of the dummy data record from the data record filter 39. The latency analyser 82 is programmed to extract in Step 410 the timestamp information 74a, b, c from the requisite field of the dummy data record: the latency analyser 82 contains instructions enabling the latency analyser 82 to identify the relevant 'non-interactive' data field 70a, b, c in the dummy data record of a particular format, and subsequently to extract the timestamp data 74a, b, c. In those embodiments where the timestamp is extracted in encrypted format - the timestamp was altered to match the format of the data required for that data field - the latency analyser 82 also contains instructions for decrypting the timestamp information into an easily readable and comparable format for analysis.

The latency analyser 82 then obtains a timestamp 74a, b, c from the reference clock 88 and compares in Step 415 this value with the timestamp 74a, b, c that was extracted from the dummy data record so as to calculate in Step 420 the time taken by the dummy data record to travel through the processor box 32 (i.e. the latency associated with the path travelled by that dummy data record). This latency value is then stored in Step 425 in the associated data store 84, together with relevant identifying information (for example, the format of the dummy data record from which the latency value was obtained and the time of day at which that latency value was obtained).

Periodically, the latency analyser 82 retrieves a subset of stored latency values 85a, b, c from the data store 84 and performs an analysis in Step 430 of the stored data to plot latency trends over time and ascertain if there are any indications of potentially-increasing latencies. For example, in one embodiment, the latency analyser 82 may carry out a moving averages analysis on the stored latency values to identify latency increases, as such analyses tend to discount anomalous single-data-point spikes or fluctuations, but will allow the latency analysis module 44 to identify any instances of increased latency that manifest in two or three successive dummy data records. In another embodiment, the latency analyser 82 may compare the input frequencies of the dummy data records (values for these input frequencies are either obtained from the extracted timestamps, or may be pre-programmed into the latency analyser 82) with the output frequencies of the dummy data records (obtained from the timestamps generated in the latency analysis module 44 by the reference clock 88). These analyses could allow the control system to take pre-emptive action in Step 435 to address latency-related problems before they begin to seriously impact the performance and data processing rate of the processor box 32.

Upon identification of such latency problems arising, the latency analyser 82 sends information regarding these latency problems to the control module 86. The control module 86 is programmed with rules and instructions relating to actions that are to be taken based on the results of the latency analysis, and generates commands according to these rules that are sent to the input control module 36 to take action to decrease the system latency.

It will be appreciated that the latency analysis module 44 performs a separate latency analysis for each format of dummy data record that is identified. However, the analysis results for the different formats of data record may be assessed in combination to allow determination of the most appropriate action that is to be undertaken for the system as a whole.

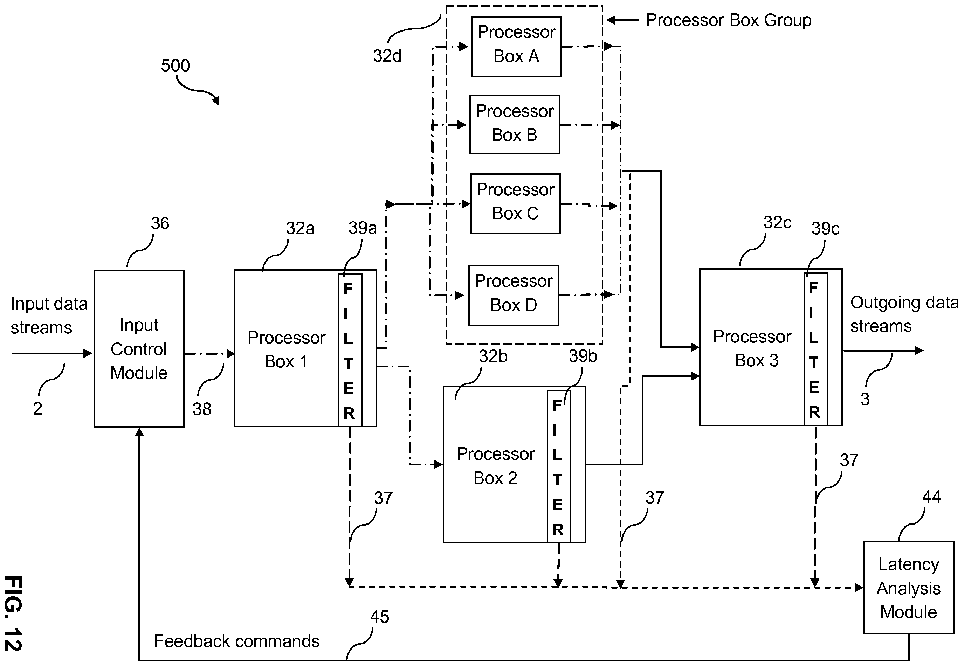

**Figure 12** shows an overview of the implementation of the control system in a network 500 comprising multiple processor boxes 32a, b, c, d according to an embodiment of the present invention. In this figure, dashed lines indicate the paths followed by the dummy data records 37; solid lines indicate the paths followed by the genuine data records 2; and the dot-dashed lines indicate those paths which are followed by both dummy and genuine data records (i.e. by the interleaved/mixed data stream 38).

In the embodiment of Figure 12, it is assumed that Processor Box 1 is the first box in the network 500 to receive the incoming data streams 2 from the data providers, and Processor Box 3 is the final box in the network 500 to process the data streams 3 before they are output to the data receivers. However, it should be understood that this is simply an illustrative example and many other processor boxes may be utilised within the network, in between Processor Boxes 1 and 3, in addition to (or instead of) Processor Box 2 and Processor Box Group 32d.

The incoming data streams 2 first enter the input control module 36 where dummy data records 37 are generated corresponding to the format of the incoming data records (as described with reference to Figure 9); these dummy data records are then inserted into the corresponding data stream 38 as it is output to Processor Box 1. The data records 38 are processed by the main processing block within Processor Box 1, and the data record filter 39a of Processor Box 1 separates the dummy data records 37 from the genuine data records 2, as was described with reference to Figure 10.

In some embodiments, some or all of the dummy data records 37 are transmitted from the data record filter 39a to the latency analysis module 44 for analysis. This is an optional step, and in other embodiments, the dummy data records 37 may all be output along with the genuine data records to the next processor box in the network. Extracting a subset of dummy data records for analysis after processing by each processor box may allow for a clearer picture of the latencies associated with that particular processor box to be obtained.

The output data records are subsequently passed to one of Processor Box 2 or Processor Box Group 32d (which itself comprises Processor Boxes A to D). Processor Box 2 and Processor Box Group 32d perform the same analysis on the incoming data records 38 and are present in the network for redundancy and resiliency, so that if one of them malfunctions or if the data throughput from Processor Box 1 is too high for one processor box to cope with on its own, some or all of the data may be transmitted to the other processor box(es). Alternatively, in some embodiments, Processor Boxes A to D may each process one or more different formats of data records - for example Processor Box A may only process Format A data records whilst Processor Box B may process both Format A and Format B data records.

The data records are processed in the respective main processing blocks of Processor Box 2 and Processor Boxes A to D, and the respective data record filters (not shown for Processor Boxes A to D) may filter out some or all of the dummy data records for transmission to the latency analysis module. Upon output from Processor Box 2 or Processor Box Group 32d, the data records enter Processor Box 3 where they are again processed and filtered. In the illustrated example, as Processor Box 3 is the last processor box in the data processing network 500, all of the dummy data records 37 are extracted from the incoming data streams 38 and transmitted to the latency analysis module 44; only the genuine data records are propagated onwards out of the network as output data streams 3.

It will be appreciated that although Processor Boxes 1, 2 and 3 are each shown in the figure as single processor boxes, this is for simplicity and to improve the clarity of the figure only - it is possible for each of these processor boxes to correspond to a group of processor boxes (such as those in Processor Box Group 2). In addition, it should also be noted that single arrows are used throughout the figure to indicate paths that may be taken by data records of all different formats (as to indicate possible paths followed by individual data record formats would render the diagram unnecessarily complicated); however not all data records will follow the same paths each time - the arrows merely indicate all possible paths that could be travelled.

The latency analysis module 44 carries out a latency analysis of the received dummy data records 37 substantially as described with reference to Figure 11, and determines if any instances of increased latency are detected that warrant sending a feedback command 45 to the input control module 36 to take action. Examples of actions that may be taken in different scenarios as a result of the analysis carried out by the latency analysis module 44 will now be elaborated upon.

In one example, the latency analysis module 44 may detect that an instance of increased latency has arisen in Processor Box A and that this processor box is overwhelmed or overloaded by the amount of incoming data. In response to this, a feedback command 45 may be sent from the latency analysis module 44 to the input control module 36 (or to Processor Box 1, or even to Processor Box A itself) to decrease the amount of data that is sent to Processor Box A and to redistribute these data records between Processor Boxes B to D where appropriate. In some embodiments, where the latency problems arising in Processor Box A are a result of a physical system malfunction, this may involve completely switching off the data input to Processor Box A until the problem can be fixed.

In another example, if instances of increased latency are detected in more than one processor box (for example, if data records passing through Processor Boxes A and B all experience increased latency), it may be deemed that simply re-distributing the incoming data streams to the other processor boxes in Processor Box Group 32d will be insufficient to address the increased latency observed, and may in fact overload the remaining two processor boxes. In this case, a feedback command may be sent to the input control module 36 or to Processor Box 1 to switch output of all outgoing data streams from Processor Box Group 32c to Processor Box 2 (or vice versa, if increased latency is observed in data records output from Processor Box 2 instead).

In some cases, if it is deemed that instances of increased latency are observed in the first component in the network (i.e. Processor Box 1) a feedback command 45 may be sent to the input control module 36 to switch to inputting a data stream to Processor Box 1 that has a lower data arrival rate. Alternatively or additionally, the input control module 36 may simply decrease the data throughput rate (throttle) to Processor Box 1. In some cases, it may be determined by the latency analysis module 44 that only a subset of data records (corresponding to a particular format of received dummy data records), passing through Processor Box 1 are being delayed. This would indicate an issue of increased latency in only one section of Processor Box 1, and therefore the above actions need only be taken in respect of data stream comprising data records of the requisite format to pass through the affected section.

An advantage of the control system of the present invention is that it allows the complex interplay and interactions between the sub-processor units (each having different effects on the latencies of data records passing through the system) to be translated into a set of empiric conditions. It is therefore possible to easily generate simple, high-level logical rules (e.g. in the event that Format A records are deemed to have increased latencies, throttle Format A data streams to Processor A) that are subsequently implemented in real-time to automatically address latency issues as they arise.

For example, other embodiments of the present invention are envisioned in which a separate latency analysis module may be associated with each individual processor box or data processing unit in the large-scale data processing network.

## Claims

1. A control system (30) for controlling the operation of a data processing unit (32), the data processing unit (32) receiving a first plurality of input streams (2) of data records from different data providers and comprising a group of interconnected processing modules (16a-e) through which the input streams pass to generate a second plurality of output streams (3) of processed data records, wherein the first and second pluralities are different, the control system comprising:
a) an input control module (36) for inputting each of the received input streams (2) into the data processing unit (32), each input stream having a remotely-defined data format which is associated with a specific subset of the processing modules (16a-e) of the data processing unit (32), the input control module comprising:
i) a dummy record generator (52) for generating dummy data records (37) to insert into the input streams (2); the dummy record generator (52) being arranged to generate dummy data records with a known identifier in an immutable data field of the data record and having a format selected from one of the remotely-defined data formats; and
ii) a data stream injection module (54) for injecting the first plurality of input streams (2) into the data processing unit, wherein the data stream injection module (54) is arranged to interleave a uniquely identifiable dummy record into the data records of the one of the first plurality of input streams (2) having the same remotely-defined format as the dummy record and to repeat the interleaving of further dummy records at regular predetermined time intervals as determined by a reference clock (63, 88);
b) a data record filter (39) for reading the immutable data field of each data record in each output stream and for identifying and separating dummy records out of the output streams which have the known identifier in the immutable data field;
c) a latency analysis module (44) arranged to:
a. receive dummy data records from the data record filter (39);
b. determine a current latency value of the dummy data record through the data processing unit (32) using knowledge of when the dummy data record was interleaved into the input data stream (38) and the time of receipt of the dummy data record using the reference clock;
c. compare the current latency value with a previously determined latency value of a previous dummy data record to determine if there is a significant change in the latency value;
d. use the format of the dummy record to determine which subset of processing modules (16a-e) of the data processing unit (32) the latency concerns; and
e. determine and output an appropriate feedback command (45) for the input control module (36) to take action to address the significant change in latency detected;
wherein the input control module (36) comprises a control processor (56) arranged to receive the feedback command (45) from the latency analysis module (44) and to regulate the flow of data input streams in accordance with the feedback command.

2. The control system of Claim 1, wherein the input control module (36) further comprises a timestamp generator (60) coupled to the reference clock (63), the timestamp generator (60) being arranged to generate a timestamp (74a, b, c) for insertion into the dummy record at a further immutable data field (70a, b, c) of the data record.

3. The control system of Claim 2, wherein an original format of the timestamp (74a, b, c) is incompatible with the format of the further immutable data field (70a, b, c) and the timestamp generator (60) is arranged to convert the timestamp into a new format compatible with the further immutable data field and the latency analysis module (44) is arranged to reconvert the read timestamp from the further immutable data field back into its original format.

4. The control system of any preceding claim, wherein the latency analysis module (44) is arranged to compare the latency of different dummy records relating to different subsets of processing modules (16a-e); to determine where multiple subsets of processing modules have a greater latency and to determine and output a feedback command (45) directed to addressing the latency of the multiple subsets of processing modules.

5. The control system of Claim 4, wherein the subsets overlap and so the latency analysis module (44) is arranged to use this to determine more precisely the location of any increase in latency.

6. The control system of any preceding claim, wherein the latency analysis module (44) is arranged to store the latency values of each dummy record in a results data store (84) grouped according to the format in which the dummy data record was received.

7. The control system of any preceding claim, wherein the latency analysis module (44) is arranged to compare the current latency value with a previously determined latency value of a previous dummy data record to determine if there is a significant change in the latency value after a predetermined time period has lapsed or after a predetermined number of dummy data records have been analysed.

8. The control system of any preceding claim, wherein the latency analysis module (44) is arranged to generate a feedback command (45) that causes the control processor (56) to throttle a particular format of data record.

9. The control system of any preceding claim, wherein the dummy record generator (52) and the input control module (36) are arranged to generate dummy data records and insert them into the input streams (2) according to a predetermined timing period which is different for different input streams.

10. The control system of any preceding claim, wherein the dummy record generator (52) and the input control module (36) are arranged to generate dummy data records and insert them into the input streams at different timing offsets to each other.

11. The control system of any preceding claim, wherein each dummy data record comprises a data record format identifier (66a, b, c).

12. The control system of any preceding claim, further comprising a format data store (58) coupled to the input control module (36) for storing a set of remotely-defined formats (61a, b, c) and a set of rules (62) determining how dummy data records are generated from the stored data formats by the dummy record generator (52).

13. The control system of any preceding claim, wherein the control system is arranged to control a plurality of data processing units (32a, b, c) arranged in an interconnected network and the system (30) further comprises a plurality of data record filters (39a, b, c) each being provided at the output of a respective data processing unit.

14. The control system of Claim 13, wherein the latency analysis module (44) is arranged to send feedback commands (45) to the outputs of the data processing units (32a, b, c) to control the output of the output streams of processed data records.

15. A method of controlling the operation of a data processing unit (32), the data processing unit (32) receiving a first plurality of input streams (2) of data records from different data providers and comprising a group of interconnected processing modules (16a-e) through which the input streams pass to generate a second plurality of output streams (3) of processed data records, wherein the first and second pluralities are different, the method comprising:
a) Inputting, by an input control module (36), each of the received input streams into the data processing unit (32), each input stream having a remotely-defined data format which is associated with a specific subset of the processing modules (16a-e) of the data processing unit (32), the inputting step comprising:
iii) generating dummy data records to insert into the input streams; the dummy data record generating step generating dummy data records with a known identifier in an immutable data field of the data record and having a format selected from one of the remotely-defined data formats; and
iv) injecting the first plurality of input streams into the data processing unit (32), wherein the injecting step comprises interleaving a uniquely identifiable dummy record into the data records of the one of the first plurality of input streams having the same remotely-defined format as the dummy record and repeating the interleaving of further dummy records at regular predetermined time intervals as determined by a reference clock (63, 88);
d) reading, by a data record filter (39), the immutable data field of each data record in each output stream and identifying and separating dummy records out of the output streams which have the known identifier in the immutable data field;
e) analysing the dummy data records, the analysing step comprising:
a. receiving dummy data records from the data record filter (39);
b. determining a current latency value of the dummy data record through the data processing unit (32) using knowledge of when the dummy data record was interleaved into the input data stream and the time of receipt of the dummy data record using the reference clock (88);
c. comparing the current latency value with a previously determined latency value of a previous dummy data record to determine if there is a significant change in the latency value;
d. using the format of the dummy record to determine which subset of processing modules (16a-e) of the data processing unit (32) the latency concerns; and
e. determining and outputting an appropriate feedback command (45) for the input control module (36) to take action to address the significant change in latency detected;
wherein the inputting step comprises receiving the feedback command (45) and regulating the flow of data input streams in accordance with the feedback command.

## Patentansprüche

1. Steuerungssystem (30) zum Steuern des Betriebs einer Datenverarbeitungseinheit (32), wobei die Datenverarbeitungseinheit (32) eine erste Mehrzahl von Eingangsströmen (2) von Datensätzen von unterschiedlichen Datenanbietern empfängt und eine Gruppe von miteinander verbundenen Verarbeitungsmodulen (16a-e) umfasst, durch welche die Eingangsströme fließen, um eine zweite Mehrzahl von Ausgangsströmen (3) von verarbeiteten Datensätzen zu erzeugen, wobei die erste und die zweite Mehrzahl voneinander unterschiedlich sind, wobei das Steuerungssystem umfasst:
a) ein Eingangssteuerungsmodul (36) zum Eingeben von jedem der empfangenen Eingangsströme (2) in die Datenverarbeitungseinheit (32), wobei jeder Eingangsstrom ein ferndefiniertes Datenformat aufweist, welches einer spezifischen Teilmenge der Verarbeitungsmodule (16a-e) der Datenverarbeitungseinheit (32) zugeordnet ist, wobei das Eingangssteuerungsmodul umfasst:
i) einen Dummy-Datensatzgenerator (52) zum Erzeugen von Dummy-Datensätzen (37), die in die Eingangsströme (2) einzuführen sind; wobei der Dummy-Datensatzgenerator (52) ausgebildet ist, um Dummy-Datensätze mit einem bekannten Identifizierer in einem unveränderlichen Datenfeld des Datensatzes zu erzeugen, und ein Format aufweist, welches aus einem der ferndefinierten Datenformate ausgewählt ist; und
ii) ein Datenstrom-Einspeisungsmodul (54) zum Einspeisen einer ersten Mehrzahl von Eingangsströmen (2) in die Datenverarbeitungseinheit, wobei das Datenstrom-Einspeisungsmodul (54) ausgebildet ist, um einen eindeutig identifizierbaren Dummy-Datensatz in die Datensätze des einen der ersten Mehrzahl von Eingangsströmen (2), welcher dasselbe ferndefinierte Format wie der Dummy-Datensatz aufweist, verschachtelt einzubringen, und um das verschachtelte Einbringen von weiteren Dummy-Datensätzen in regelmäßigen vorbestimmten Zeitintervallen zu wiederholen, wie durch eine Referenzuhr (63, 88) bestimmt;
b) einen Datensatzfilter (39) zum Lesen des unveränderlichen Datenfelds jedes Datensatzes in jedem Ausgangsstrom und zum Identifizieren und Trennen von Dummy-Datensätzen aus den Ausgangsströmen, welche den bekannten Identifizierer im unveränderlichen Datenfeld aufweisen;
c) ein Latenzanalysemodul (44), ausgebildet zum:
a. Empfangen von Dummy-Datensätzen vom Datensatzfilter (39);
b. Bestimmen eines aktuellen Latenzwertes des Dummy-Datensatzes durch die Datenverarbeitungseinheit (32) durch Verwenden des Wissens über den Zeitpunkt, in welchem der Dummy-Datensatz in den Eingangsdatenstrom (39) verschachtelt eingebracht wurde, und des Empfangszeitpunkts des Dummy-Datensatzes durch Verwenden der Referenzuhr;
c. Vergleichen des aktuellen Latenzwertes mit einem vorbestimmten Latenzwert eines vorhergehenden Dummy-Datensatzes, um zu bestimmen, ob eine wesentliche Änderung im Latenzwert vorliegt;
d. Verwenden des Formats des Dummy-Datensatzes, um zu bestimmen, welche Untermenge von Verarbeitungsmodulen (16a-e) der Datenverarbeitungseinheit (32) von der Latenz betroffen ist; und
e. Bestimmen und Ausgeben eines geeigneten Feedback-Befehls (45) für das Eingangssteuerungsmodul (36), um Maßnahmen in Bezug auf die erfasste wesentliche Latenzänderung zu ergreifen;
wobei das Eingangssteuerungsmodul (36) einen Steuerungsprozessor (56) umfasst, welcher ausgebildet ist, um den Feedback-Befehl (45) vom Latenzanalysemodul (44) zu empfangen und den Fluss von Dateneingangsströmen in Abhängigkeit vom Feedback-Befehl zu regulieren.

2. Steuerungssystem nach Anspruch 1, wobei das Eingangssteuerungsmodul (36) ferner einen Zeitstempelgenerator (60) umfasst, welcher mit der Referenzuhr (63) verbunden ist, wobei der Zeitstempelgenerator (60) ausgebildet ist, um einen Zeitstempel (74a, b, c) zum Einführen in den Dummy-Datensatz an einem weiteren unveränderlichen Datenfeld (70a, b, c) des Datensatzes zu erzeugen.

3. Steuerungssystem nach Anspruch 2, wobei ein ursprüngliches Format des Zeitstempels (74a, b, c) mit dem Format des weiteren unveränderlichen Datenfelds (70a, b, c) inkompatibel ist und der Zeitstempelgenerator (60) ausgebildet ist, um den Zeitstempel in ein neues Format umzuwandeln, welches mit dem weiteren unveränderlichen Datenfeld kompatibel ist, und das Latenzanalysemodul (44) ausgebildet ist, um den Lesezeitstempel vom weiteren unveränderlichen Datenfeld zurück in sein ursprüngliches Format umzuwandeln.

4. Steuerungssystem nach einem der vorhergehenden Ansprüche, wobei das Latenzanalysemodul (44) ausgebildet ist, um die Latenz unterschiedlicher Dummy-Datensätze in Bezug auf unterschiedliche Teilmengen von Verarbeitungsmodulen (16a-e) miteinander zu vergleichen; um zu bestimmen, wo mehrere Teilmengen von Verarbeitungsmodulen eine höhere Latenz aufweisen, und um einen Feedback-Befehl (45) zu bestimmen und auszugeben, welcher darauf abzielt, sich mit der Latenz der mehreren Teilmengen von Verarbeitungsmodulen zu befassen.

5. Steuerungssystem nach Anspruch 4, wobei die Teilmengen überlappen und so, dass das Latenzanalysemodul (44) ausgebildet ist, um dies zu benutzen, um die Position einer etwaigen Erhöhung der Latenz präziser zu bestimmen.

6. Steuerungssystem nach einem der vorhergehenden Ansprüche, wobei das Latenzanalysemodul (44) ausgebildet ist, um die Latenzwerte jedes Dummy-Datensatzes in einem Ergebnisdatenspeicher (84) in Gruppen gemäß dem Format, in welchem der Dummy-Datensatz empfangen wurde, zu speichern.

7. Steuerungssystem nach einem der vorhergehenden Ansprüche, wobei das Latenzanalysemodul (44) ausgebildet ist, um den aktuellen Latenzwert mit einem vorbestimmten Latenzwert eines vorhergehenden Dummy-Datensatzes zu vergleichen, um zu bestimmen, ob eine wesentliche Änderung des Latenzwerts vorliegt, nachdem eine vorbestimmte Zeitspanne vergangen ist oder nachdem eine vorbestimmte Anzahl von Dummy-Datensätzen analysiert worden ist.

8. Steuerungssystem nach einem der vorhergehenden Ansprüche, wobei das Latenzanalysemodul (44) ausgebildet ist, um einen Feedback-Befehl (45) zu erzeugen, welcher den Steuerprozessor (56) dazu veranlasst, ein besonderes Format eines Datensatzes zu drosseln.

9. Steuerungssystem nach einem der vorhergehenden Ansprüche, wobei der Dummy-Datensatzgenerator (52) und das Eingangssteuerungsmodul (36) ausgebildet sind, um Dummy-Datensätze zu erzeugen und sie in die Eingangsströme (2) gemäß einer vorbestimmten Zeitspanne einzuführen, welche für unterschiedliche Eingangsströme jeweils unterschiedlich ist.

10. Steuerungssystem nach einem der vorhergehenden Ansprüche, wobei der Dummy-Datensatzgenerator (52) und das Eingangssteuerungsmodul (36) ausgebildet sind, um Dummy-Datensätze zu erzeugen und sie in die Eingangsströme mit einem jeweils unterschiedlichen Zeitversatz einzuführen.

11. Steuerungssystem nach einem der vorhergehenden Ansprüche, wobei jeder Dummy-Datensatz einen Datensatzformatidentifizierer (66a, b, c) umfasst.

12. Steuerungssystem nach einem der vorhergehenden Ansprüche, ferner umfassend einen Formatdatenspeicher (58), welcher mit dem Eingangssteuerungsmodul (36) zum Steuern eines Satzes von ferndefinierten Formaten (61a, b, c) und eines Satzes von Regeln (62) verbunden ist, welche bestimmen, wie Dummy-Datensätze von den gespeicherten Datenformaten durch den Dummy-Datensatzgenerator (52) erzeugt werden.

13. Steuerungssystem nach einem der vorhergehenden Ansprüche, wobei das Steuerungssystem ausgebildet ist, um eine Mehrzahl von Datenverarbeitungseinheiten (32a, b, c) zu steuern, welche in einem Verbundnetz angeordnet sind, und das System (30) ferner eine Mehrzahl von Datensatzfiltern (39a, b, c) umfasst, welche jeweils am Ausgang einer entsprechenden Datenverarbeitungseinheit bereitgestellt sind.

14. Steuerungssystem nach Anspruch 13, wobei das Latenzanalysemodul (44) ausgebildet ist, um Feedback-Befehle (45) an die Ausgänge der Datenverarbeitungseinheiten (32a, b, c) zu senden, um den Ausgang der Ausgangsströme von verarbeiteten Datensätze zu steuern.

15. Verfahren zum Steuern des Betriebs einer Datenverarbeitungseinheit (32), wobei die Datenverarbeitungseinheit (32) eine erste Mehrzahl von Eingangsströmen (2) von Datensätzen von unterschiedlichen Datenanbietern empfängt und eine Gruppe von miteinander verbundenen Verarbeitungsmodulen (16a-e) umfasst, durch welche die Eingangsströme fließen, um eine zweite Mehrzahl von Ausgangsströmen (3) von verarbeiteten Datensätzen zu erzeugen, wobei die erste und die zweite Mehrzahl voneinander unterschiedlich sind, wobei das Verfahren umfasst:
a) Eingeben, durch das Eingangssteuerungsmodul (36), jedes der empfangenen Eingangsströme in die Datenverarbeitungseinheit (32), wobei jeder Eingangsstrom ein ferndefiniertes Datenformat aufweist, welches einer spezifischen Teilmenge der Verarbeitungsmodule (16a-e) der Datenverarbeitungseinheit (32) zugeordnet ist, wobei der Eingabeschritt umfasst:
iii) Erzeugen von Dummy-Datensätze zum Einführen in die Eingangsströme; wobei der Schritt des Erzeugens der Dummy-Datensätze Dummy-Datensätze mit einem bekannten Identifizierer in einem unveränderlichen Datenfeld des Datensatzes erzeugt und ein Format aufweist, welches aus einem der ferndefinierten Datenformate ausgewählt ist; und
iv) Einspeisen der ersten Mehrzahl von Eingangsströmen in die Datenverarbeitungseinheit (32), wobei der Schritt des Einspeisens das verschachtelte Einbringen eines eindeutig identifizierbaren Dummy-Datensatzes in die Datensätze des einen der ersten Mehrzahl von Eingangsströmen umfasst, welcher dasselbe ferndefinierte Format des Dummy-Datensatzes aufweist, und Wiederholen des verschachtelten Einbringens von weiteren Dummy-Datensätzen in regelmäßigen vorbestimmten Zeitintervallen, wie von der Referenzuhr (63, 68) bestimmt;
d) Lesen, durch einen Datensatzfilter (39), des unveränderlichen Datenfelds jedes Datensatzes in jedem Ausgangsstrom und Identifizieren und Trennen der Dummy-Datensätze aus den Ausgangsströmen, welche den bekannten Identifizierer im unveränderlichen Datenfeld aufweisen;
e) Analysieren der Dummy-Datensätze, wobei der Schritt des Analysierens Folgendes umfasst:
a. Empfangen von Dummy-Datensätzen vom Datensatzfilter (39);
b. Bestimmen eines aktuellen Latenzwertes des Dummy-Datensatzes durch die Datenverarbeitungseinheit (32) durch Verwenden des Wissens über den Zeitpunkt, in welchem der Dummy-Datensatz in den Eingangsdatenstrom verschachtelt eingebracht wurde, und des Empfangszeitpunkts des Dummy-Datensatzes durch Verwenden der Referenzuhr (88);
c. Vergleichen des aktuellen Latenzwertes mit einem vorbestimmten Latenzwert eines vorhergehenden Dummy-Datensatzes, um zu bestimmen, ob eine wesentliche Änderung im Latenzwert vorliegt;
d. Verwenden des Formats des Dummy-Datensatzes, um zu bestimmen, welche Untermenge von Verarbeitungsmodulen (16a-e) der Datenverarbeitungseinheit (32) von der Latenz betroffen ist; und
e. Bestimmen und Ausgeben eines geeigneten Feedback-Befehls (45) für das Eingangssteuerungsmodul (36), um Maßnahmen in Bezug auf die erfasste wesentliche Latenzänderung zu ergreifen;
wobei der Schritt des Einführens das Empfangen des Feedback-Befehls (45) und das Regulieren des Flusses von Dateneingangsströmen in Abhängigkeit vom Feedback-Befehl umfasst.

## Revendications

1. Système de commande (30) permettant de commander le fonctionnement d'une unité de traitement de données (32), l'unité de traitement de données (32) recevant une première pluralité de flux d'entrée (2) d'enregistrements de données provenant de différents fournisseurs de données et comprenant un groupe de modules interconnectés de traitement (16a-e) que traversent les flux d'entrée pour produire une seconde pluralité de flux de sortie (3) d'enregistrements de données, les première et seconde pluralités étant différentes, le système de commande comprenant :
a) un module de commande d'entrée (36) permettant d'entrer chacun des flux d'entrée reçus (2) dans l'unité de traitement de données (32), chaque flux d'entrée présentant un format de données défini à distance qui est associé à un sous-ensemble spécifique des modules de traitement (16a-e) de l'unité de traitement de données (32), le module de commande d'entrée comprenant :
i) un générateur d'enregistrements factices (52) permettant de produire des enregistrements de données factices (37) à insérer dans les flux d'entrée (2) ; le générateur d'enregistrements factices (52) étant agencé pour produire des enregistrements de données factices avec un identifiant connu dans un champ de données immuables de l'enregistrement de données et présentant un format choisi à partir d'un des formats de données défini à distance ; et
ii) un module d'injection de flux de données (54) permettant d'injecter la première pluralité de flux d'entrée (2) dans l'unité de traitement de données, le module d'injection de flux de données (54) étant agencé pour intercaler un enregistrement factice identifiable de manière unique dans les enregistrements de données de l'un des flux de la première pluralité de flux d'entrée (2) comportant le même format défini à distance que l'enregistrement factice et pour répéter l'entrelacement d'enregistrements factices à des intervalles de temps prédéfinis réguliers, tel que défini par une horloge de référence (63, 88) ;
b) un filtre d'enregistrement de données (39) permettant de lire le champ de données immuables de chaque enregistrement de données dans chaque flux de sortie et d'identifier et de séparer les enregistrements factices sortant des flux de sortie dont l'identifiant connu se trouve dans le champ de données immuables ;
c) un module d'analyse de latence (44) agencé pour :
a. recevoir des enregistrements de données factices depuis le filtre d'enregistrement de données (39) ;
b. déterminer une valeur actuelle de latence de l'enregistrement de données factices par le biais de l'unité de traitement de données (32) à l'aide de la connaissance du moment où l'enregistrement de données factices a été intercalé dans le flux de données d'entrée (38) et du moment de réception de l'enregistrement de données factices à l'aide de l'horloge de référence ;
c. comparer la valeur actuelle de latence à une valeur préalablement déterminée de latence d'un enregistrement préalable de données factices pour déterminer s'il existe une variation importante dans la valeur de latence ;
d. employer le format de l'enregistrement factice pour déterminer quel sous-ensemble de modules de traitement (16a-e) de l'unité de traitement de données (32) concerne la latence ; et
e. déterminer et produire une commande appropriée de rétroaction (45) pour le module de commande d'entrée (36) pour prendre des actions visant à gérer la variation importante de la latence détectée ;
le module de commande d'entrée (36) comprenant un processeur de commande (56) agencé pour recevoir la commande de rétroaction (45) depuis le module d'analyse de latence (44) et pour réguler le flux de flux d'entrée de données conformément à la commande de rétroaction.

2. Système de commande selon la revendication 1, dans lequel le module de commande d'entrée (36) comprend en outre un générateur d'horodatage (60) couplé à l'horloge de référence (63), le générateur d'horodatage (60) étant agencé pour produire un horodatage (74a, b, c) pour insertion dans l'enregistrement factice au niveau d'un champ de données immuables supplémentaire (70a, b, c) de l'enregistrement de données.

3. Système de commande selon la revendication 2, dans lequel un format initial de l'horodatage (74a, b, c) est incompatible avec le format de l'autre champ de données immuables (70a, b, c) et où le générateur d'horodatage (60) est agencé pour convertir l'horodatage en un nouveau format compatible avec l'autre champ de données immuables et où le module d'analyse de latence (44) est agencé pour reconvertir l'horodatage de lecture provenant de l'autre champ de données immuables dans son format initial.

4. Système de commande selon l'une quelconque des revendications précédentes, dans lequel le module d'analyse de latence (44) est agencé pour comparer la latence de différents enregistrements factices liés à différents sous-ensembles de modules de traitement (16a-e) ; pour déterminer quand de multiples sous-ensembles de modules de traitement ont une plus grande latence et pour déterminer et pour produire une commande de rétroaction (45) destinée à aborder la latence des multiples sous-ensembles de modules de traitement.

5. Système de commande selon la revendication 4, dans lequel les sous-ensembles se chevauchent et ainsi, l'analyse du module de latence (44) est agencé pour utiliser cela pour déterminer plus précisément l'emplacement de toute augmentation de la latence.

6. Système de commande selon l'une quelconque des revendications précédentes, dans lequel le module d'analyse de latence (44) est agencé pour mémoriser les valeurs de latence de chaque enregistrement factice dans un magasin de données de résultats (84) regroupés selon le format dans lequel l'enregistrement de données factices a été reçu.

7. Système de commande selon l'une quelconque des revendications précédentes, dans lequel le module d'analyse de latence (44) est agencé pour comparer la valeur actuelle de latence à une valeur de latence préalablement déterminée d'un enregistrement de données factices précédent pour déterminer s'il existe une variation importante de la valeur de latence après qu'une durée prédéfinie s'est écoulée ou après qu'un nombre prédéfini d'enregistrements de données factices a été analysé.

8. Système de commande selon l'une quelconque des revendications précédentes, dans lequel le module d'analyse de latence (44) est agencé pour produire une commande de rétroaction (45) qui amène le processeur de commande (56) à rétrécir un format particulier d'enregistrement de données.

9. Système de commande selon l'une quelconque des revendications précédentes, dans lequel le générateur d'enregistrements factices (52) et le module de commande d'entrée (36) sont agencés pour produire des enregistrements de données factices et pour les introduire dans les flux d'entrée (2) conformément à une période prédéfinie de chronométrage, qui diffère pour différents flux d'entrée.

10. Système de commande selon l'une quelconque des revendications précédentes, dans lequel le générateur d'enregistrements factices (52) et le module de commande d'entrée (36) sont agencés pour produire des enregistrements de données factices et pour les insérer dans les flux d'entrée à différents décalages de chronométrage les uns par rapport aux autres.

11. Système de commande selon l'une quelconque des revendications précédentes, dans lequel chaque enregistrement de données factices comprend un identifiant de format d'enregistrement de données (66a, b, c).

12. Système de commande selon l'une quelconque des revendications précédentes, comprenant en outre un magasin de données de format (58) couplé au module de commande d'entrée (36) pour mémoriser un ensemble de formats définis à distance (61a, b, c) et un ensemble de règles (62) déterminant comment les enregistrements de données factices sont produites à partir des formats de données enregistrées par le générateur d'enregistrements factices (52).

13. Système de commande selon l'une quelconque des revendications précédentes, le système de commande étant agencé pour commander une pluralité d'unités de traitement de données (32a, b, c) agencées selon un réseau interconnecté et le système (30) comprenant en outre une pluralité de filtres d'enregistrements de données (39a, b, c), chacun étant prévu à la sortie d'une unité respective de traitement de données.

14. Système de commande selon la revendication 13, dans lequel le module d'analyse de latence (44) est agencé pour envoyer des commandes de rétroaction (45) aux sorties des unités de traitement de données (32a, b, c) pour commander la sortie des flux de sortie des enregistrements de données traitées.

15. Procédé de commande du fonctionnement d'une unité de traitement de données (32), l'unité de traitement de données (32) recevant une première pluralité de flux d'entrée (2) d'enregistrements de données provenant de différents fournisseurs de données et comprenant un groupe de modules de traitement interconnectés (16a-e) que traversent les flux d'entrée pour produire une seconde pluralité de flux de sortie (3) d'enregistrements de données traitées, les première et seconde pluralités étant différentes, le procédé comprenant :
a) l'entrée, par un module de commande d'entrée (36), de chacun des flux d'entrée reçus dans l'unité de traitement de données (32), chaque flux d'entrée présentant un format de données défini à distance qui est associé à un sous-ensemble spécifique des modules de traitement (16a-e) de l'unité de traitement de données (32), l'étape d'entrée comprenant :
iii) la production d'enregistrements de données factices à insérer dans les flux d'entrée ; l'étape de production d'enregistrements factices produisant des enregistrements de données factices avec un identifiant connu dans un champ de données immuables de l'enregistrement de données et présentant un format choisi à partir d'un des formats de données défini à distance ; et
iv) l'injection de la première pluralité de flux d'entrée dans l'unité (32) de traitement de données, l'étape d'injection comprenant l'entrelacement d'un enregistrement factice identifiable de manière unique dans les enregistrements de données de l'un des flux de la première pluralité de flux d'entrée comportant le même format défini à distance que l'enregistrement factice et la répétition de l'entrelacement d'enregistrements factices à des intervalles de temps prédéfinis réguliers, tel que défini par une horloge de référence (63, 88) ;
d) la lecture, par un filtre d'enregistrement de données (39), du champ de données immuables de chaque enregistrement de données dans chaque flux de sortie et l'identification et la séparation des enregistrements factices sortant des flux de sortie dont l'identifiant connu se trouve dans le champ de données immuables ;
e) l'analyse des enregistrements de données factices, l'étape d'analyse comprenant :
a. la réception des enregistrements de données factices depuis le filtre d'enregistrement de données (39) ;
b. la détermination d'une valeur actuelle de latence de l'enregistrement de données factices par le biais de l'unité de traitement de données (32) à l'aide de la connaissance du moment où l'enregistrement de données factices a été intercalé dans le flux de données d'entrée et du moment de réception de l'enregistrement de données factices à l'aide de l'horloge de référence (88) ;
c. la comparaison de la valeur actuelle de latence à une valeur préalablement déterminée de latence d'un enregistrement préalable de données factices pour déterminer s'il existe une variation importante dans la valeur de latence ;
d. l'emploi du format de l'enregistrement factice pour déterminer quel sous-ensemble de modules de traitement (16a-e) de l'unité de traitement de données (32) concerne la latence ; et
e. la détermination et la production d'une commande appropriée de rétroaction (45) pour le module de commande d'entrée (36) pour prendre des actions visant à gérer la variation importante de la latence détectée ;
l'étape d'entrée comprenant la réception de la commande de rétroaction (45) et la régulation du flux de flux d'entrée de données conformément à la commande de rétroaction.
